# EUROPEAN PATENT SPECIFICATION

(11) **EP 2 439 081 B1**
(45) Date of publication and mention of the grant of the patent: **04.09.2013**
(21) Application number: 11183916.3
(22) Date of filing: 05.10.2011
(51) Int. Cl.: B60C 9/14, B60C 9/13, B29D 30/16, B60C 9/11

(54) **A pneumatic tire with a woven or knitted reinforcement**
Luftreifen mit gewobener oder gewirkter Verstärkung
Pneu avec renfort tissé ou tricoté

(30) Priority: 07.10.2010 US 899749
(43) Date of publication of application: 11.04.2012
(73) Proprietor: The Goodyear Tire & Rubber Company, Akron, OH 44316-0001 (US)
(72) Inventor: Donckels, Yves, B-5101 Erpent (BE); Roeck, Jesse Scott, Copley, OH Ohio 44321 (US); Imhoff, Serge Julien Auguste, L-9184 Schrondweiler (LU); Beck, Raphael, L-8558 Reichlange (LU)
(74) Representative: Kutsch, Bernd

(56) References cited:
- EP-A2- 1 447 209
- WO-A1-2009/144244
- JP-A- 2003 306 009
- JP-A- 2005 145 318
- US-A1- 2006 185 778

## Description

### Field of the Invention

The present invention relates to a pneumatic tire, and more particularly, to a less costly and more quickly manufactured pneumatic tire.

### Background of the Invention

Historically, the pneumatic tire has been fabricated as a laminate structure of generally toroidal shape having beads, a tread, belt reinforcement, and a carcass. The manufacturing technologies employed for the most part involved assembling the many tire components from flat strips or sheets of material. Each component is placed on a building drum and cut to length such that the ends of the component meet or overlap creating a splice.

In the first stage of assembly, the prior art carcass will normally include one or more plies, and a pair of sidewalls, a pair of apexes, an innerliner (for a tubeless tire), a pair of chafers and perhaps a pair of gum shoulder strips. Annular bead cores can be added during this first stage of tire building and the plies can be turned around the bead cores to form the ply turnups. Additional components may be used or even replace some of those mentioned above.

This intermediate article of manufacture would be cylindrically formed at this point in the first stage of assembly. The cylindrical carcass is then expanded into a toroidal shape after completion of the first stage of tire building. Reinforcing belts beneath the tread are added to this intermediate article during a second stage of tire manufacture, which can occur using the same building drum or work station. This form of manufacturing a tire from flat components that are then toroidally formed limits the ability of the tire to be produced in an optimally uniform fashion.

Conventionally, it has been proposed to lay carcass plies in hoops or arcs having the ends of the carcass plies extending in a circumferential direction. A tire made this way may be dispensed of any circular bead core in the beads and the carcass would not have any lateral parts turned up radially with edges delimited by cut cables.

A similar conventional process simultaneously produces multiple arches using multiple cords in the process of manufacturing the carcass ply in an effort to speed the rate of manufacture. This process provides each of the circumferential portions being made from a single fine cord and the distance between cords, or the pitch, being very narrow. Thus, an array of cords has increased the pitch between cords as the array is applied.

In these conventional methods of manufacturing ply cords on a toroidal surface, it has been determined that a tension in the cords is optimal and that the cords should be laid in a straight line on a convex surface from turnaround to turnaround. In other words, a cord angle may be arranged other than 90°. However, 90 ° is a preferred orientation for the cord path because 90 ° mitigates likelihood of slippage off angle because 90° is the shortest ply path. Conventionally, these angles could not be adjusted in any fashion other than to provide a linear path because the tension placed on the cord during manufacture is required as the cord is being applied on the round or convex surface. In each conventional step, a carcass ply uses a technique called "winding" wherein the turnarounds apply tension across the entire cord path. Such a tire winding step for applying ply cords can only work on a convex surface and does not allow "placement" on a concave toroidal shape, as occurs in the sidewall regions, near the beads of the tire.

Another conventional method manufactures ply cords that allow placement on concave and convex surfaces, similar to the shape of a finished tire. This method does not require tension from turnaround to turnaround as the cord path is being established, thereby permitting nonlinear cord paths. Further, the cord loop endings, or turnarounds, may occur at different diameters and placement of the ply cords may be such that toroidially shaped ply cords may include forming turnups and allowing anchoring the ply using the bead cores. Additionally, the pitch between the cords may uniformly increase as the diameter increases along the cord path. The cord pitch increases uniformly as the diameter increases along the ply path due to a coordinated differential motion between the application of the cord and the movement of the toroidal surface.

The structure of a conventional pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A variety of conventional design approaches have been used to control separation of tire elements in the bead regions of a tire. For example, one method has been to provide a "flipper" surrounding the bead and the bead filler. The flipper works as a spacer that keeps the ply from making direct contact with the inextensible beads, allowing some degree of relative motion between the ply, where it turns upward under the bead, and the respective beads. In this role as a spacer, a flipper may reduce disparities of strain on the ply and on the adjacent rubber components of the tire (e.g., the filler apex, the sidewall rubber, in the bead region, and the elastomeric portions of the ply itself).

The flipper may be made of a square woven cloth that is a textile in which each fiber, thread, or cord has a generally round cross-section. When a flipper is cured with a tire, the stiffness of the fibers/cords becomes essentially the same in any direction within the plane of the textile flipper.

In addition to the use of flippers as a means by which to reduce the tendency of a ply to separate, or as an alternative, another method that has been used involves the placement of "chippers." A chipper is a circumferentially deployed metal or fabric layer that is disposed within the bead region in the portion of the tire where the bead fits onto the wheel rim. More specifically, the chipper lies inward of the wheel rim (i.e., toward the bead) and outward (i.e., radially outward, relative to the bead viewed in cross section) of the portion of the ply that turns upward around the bead. Chippers serve to stiffen, and increase the resistance to flexure of, the adjacent rubber material, which itself is typically adjacent to the turnup ply endings.

WO-A- 2009/144244 describes a tire in accordance with the preamble of claim 1.

JP-A- 2003-306009 describes a pneumatic tire comprising a protective layer for covering a cord cut end comprising a woven fabric.

### Summary of the Invention

The invention relates to a tire in accordance with claim 1.

Dependent claims refer to preferred embodiments of the invention.

In one aspect of the present invention, the woven fabric has a 5 EPI to 18 EPI warp pair construction and a 5 EPI to 35 EPI weft construction (EPI = ends per 2.54 cm).

In another aspect of the present invention, the warp yarns are 1220/1 dtex rayon and the weft yarns are 1840/2 dtex rayon or 2200/2 dtex polyester. Other examples of weft constructions may be: 1100/2, 1440/2, 1670/2, 2200/2 polyester or 1220/2, 1840/2, 1840/3, 2440/2 dtex rayon.

In still another aspect of the present invention, the warp yarns have a density of 18 EPI and the weft yarns have a density of 12 EPI.

In yet another aspect of the present invention, the warp yarns have a density of 14 EPI and the weft yarns have a density of 26 EPI.

In still another aspect of the present invention, the reinforcing structure of the carcass has one or more layers of woven fabric.

In one aspect of the invention, the fabric may be a woven fabric having a 5 ends per 2.54 cm to 18 ends per 2.54 cm warp pair construction and a 5 ends per 2.54 cm to 35 ends per 2.54 cm weft construction. Preferably, the warp yarns are 1220/1 dtex rayon and the weft yarns are 2200/2 dtex polyester. Preferably, the warp yarns have a density of 14 ends per 2.54 cm and the weft yarns have a density of 26 ends per 2.54 cm.

In one aspect of the invention, the fabric may have a LENO 2T configuration. Preferably, the LENO 2T configuration has a 5 ends per 2.54 cm to 18 ends per 2.54 cm warp pair construction and a 5 ends per 2.54 cm to 35 ends per 2.54 weft construction.

In one aspect of the invention, the fabric may be a knitted fabric.

In yet one aspect of the invention, the woven or knitted fabric may further comprise an adhesion promoter disposed thereon.

In yet one aspect of the invention, the reinforced ply may have two or more layers of woven or knitted fabric.

In yet one aspect of the invention, the warp yarns may comprise at least two fibers of different fiber materials.

In yet one aspect of the invention, the reinforced ply is a carcass ply comprised entirely of the woven or knitted fabric.

In yet one aspect of the invention, the reinforcing structure may:
(i) start at a turn up end or an end portion of the reinforced ply in at least one bead region of the tire and extend about the respective bead into the sidewall of the tire between a radial outer end of a tire apex and a tire shoulder area; or
(ii) start at a turn up end or an end portion of the reinforced ply in at least one bead region of the tire and extend about the respective bead radially outwards up to 10% to 100%, alternatively 30% to 65% or about 50%, of the radial height of a tire apex; or
(iii) start at distance from a turn up end or an end portion of the reinforced ply in at least one bead region of the tire; or
(iv) start at distance from a turn up end or an end portion of the reinforced ply in at least one bead region of the tire and extend about the respective tire bead into the sidewall of the tire between a radial outer end of a tire apex and a tire shoulder area; or
(v) start at distance from a turn up end or an end portion of the reinforced ply in at least one bead region of the tire and extend about the respective bead radially outwards up to 10% to 100%, alternatively 30% to 65% or about 50%, of the radial height of a tire apex; or
(vi) at least partially extend under the tread of tire between the tire shoulder; or
(vii) extend at least from one tire shoulder to the other tire shoulder.

In yet one aspect of the invention, the reinforcing structure may comprise:
(i) at least two such reinforcing structures disposed in a spaced relationship; or
(ii) at least three such reinforcing structures disposed in a spaced relationship; or
(iii) at least four such reinforcing structures disposed in a spaced relationship.

In yet one aspect of the invention, the reinforcing structure may consist of one layer of an open construction woven fabric or of one layer of an open construction knitted fabric.

In yet one aspect of the invention, the material of the weft yarns may be different from the material of the warp yarns.

In yet one aspect of the invention, at least one of the density, the yarn construction, the material and the dtex of the weft yarns may be different from the respective parameter of the warp yarns.

In yet one preferred aspect of the invention, the material of the weft yarns is polyester and the material of the warp yarns is rayon.

In yet one preferred aspect of the invention, the weft yarns are a 2200/2 dtex or 1840/2 polyester yarns and the warp yarns are a 1220/1 dtex rayon yarns.

In yet one aspect of the invention, the warp yarns have a density of at least 2 ends per 2.54 cm higher than the weft yarns.

In yet one preferred aspect of the invention, the weft yarns and/or the warp yarns may comprise at least two fibers of different materials.

In yet another aspect of the invention, the weft yarns of the reinforced ply may extend at least substantially in the radial direction, i.e. in the radial direction +/-10 degrees, preferably in the radial direction +/- 5 degrees or exactly in the radial direction.

In yet another aspect of the invention, the reinforcing structure may start at distance from a turn up end or an end portion of the reinforced ply in at least one bead region of the tire, the distance being at least 20 mm, alternatively at least 50 mm or at least 100 mm.

In yet another aspect of the invention, the tire may be symmetric with regard to the location(s) of the reinforcing structure. In an other aspect of the invention, the tire may be asymmetric with regard to the location(s) of the reinforcing structure.

In yet another aspect of the invention the tire may be a runflat passenger tire or a high performance tire.

In yet one other aspect of the invention, the woven or knitted fabric of the reinforced ply or the cords or strip forming the fabric is dispensed from one or more spools.

In yet one other aspect of the invention, the woven or knitted fabric of the reinforced ply is constructed by placing a series of strips adjacent to each other.

### Definitions

"Annular" means formed like a ring.

"Axial" and "axially" are used herein to refer to lines or directions that are parallel to the axis of rotation of the tire.

"Cable" means a cord formed by twisting together two or more plied yarns.

"Carcass" means the tire structure apart from the belt structure, tread, undertread, and sidewall rubber over the plies, but including the beads.

"Circumferential" means lines or directions extending along the perimeter of the surface of the annular tire parallel to the Equatorial Plane (EP) and perpendicular to the axial direction.

"Cord" means one of the reinforcement strands which the reinforcement structures of the tire comprise.

"Denier" means the weight in grams per 9000 meters (unit for expressing linear density). Dtex means the weight in grams per 10,000 meters.

"Inner" means toward the inside of the tire and "outer" means toward its exterior.

"Knitted" means intertwining threads in a series of connected loops. For example, knitted may define a method by which thread or yarn is turned into a fabric of consecutive loops, called stitches. As each row of stitches progresses, a new loop may be pulled through an existing loop.

"Lateral" means an axial direction.

"Radial" and "radially" are used to mean directions radially toward or away from the axis of rotation of the tire.

"Woven" means interlacing lengthwise cords or yarns (warp) with filling yarns (weft). The interlaced yarns may be two or more sets of yarns at right angles to each other.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Brief Description of the Drawings

The structure, operation, and advantages of the present invention will become more apparent upon contemplation of the following description as viewed in conjunction with the accompanying drawings, wherein:
Figure 1 shows a perspective view of the apparatus for use with the present invention;
Figures 2 and 3 illustrate cross-sectional views of a toroidal mandrel of the apparatus of Fig. 1;
Figures 4 through 9 show schematic views of a single cord being placed in a predetermined cord path in a flat view;
Figures 10 through 15 show a schematic view of the cords being applied on the toroidal mandrel;
Figure 16 shows a schematic view of dispensing a plurality of cords simultaneously;
Figure 17 shows a partial side view of an exemplary cord path;
Figure 18 is a partial flat view of the exemplary cord path of Fig. 14 showing both sides of the ply path;
Figures 19 through 25 show a variety of exemplary ply path designs;
Figure 26 illustrates cross-sectional views of the toroidal mandrel of the present invention having alternative cord path placement thereon;
Figure 27 represents a schematic cross-sectional view of an example tire for use with the present invention;
Figure 28 represents a schematic detail view of the bead region of the example tire shown in Fig. 27;
Figure 29 represents a schematic detail of an example fabric structure in accordance with the present invention; and
Figure 30 represents a schematic detail of another example fabric structure in accordance with the present invention.

### Detailed Description of the Illustrative Embodiments

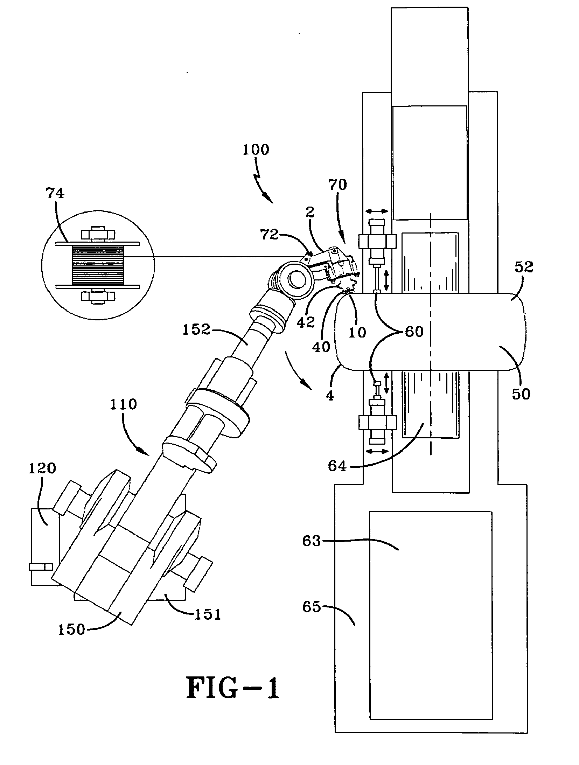

With reference to Fig. 1, a perspective view of an apparatus 100 for use with the present invention is illustrated. The apparatus 100 has a guide means which has, in addition to a ply mechanism 70, a robotic computer controlled system 110 for placing a ply cord 2 onto a toroidal surface 50. A means for applying an elastomeric layer 4 onto a mandrel 52 is provided which may include a server mechanism (not shown) to feed strips of the elastomeric layer 4 to the mandrel 52.

The robotic computer controlled system 110 has a computer 120 and preprogrammed software which dictates a ply path 10 to be used for a particular tire size. Each movement of the system 110 can be precisely articulated. The robot 150, which is mounted on a pedestal 151, has a robotic arm 152 which can be moved in six axes. The manipulated robotic arm 152 is attached to the ply mechanism 70 as shown.

Loop end forming mechanisms 60 are positioned on each side 56 of the toroidal mandrel 52. The robotic arm 152 feeds the ply cord 2 in predetermined paths 10 and the loop end forming mechanism 60 holds the ply cord 2 in place as a looped end 12 is formed. Each time a looped end 12 is formed, the toroidal mandrel 52 is rotated to index to a next pitch P and an adjacent ply path 10 around the toroidal mandrel 52.

The movement of the ply mechanism 70 permits convex curvatures to be coupled to concave curvatures near the bead areas, thus mimicking the final, as molded, shape of the pneumatic tire. A means 63 for rotating the mandrel 52 about an axle 64 may be mounted to a rigid frame 65 as shown.

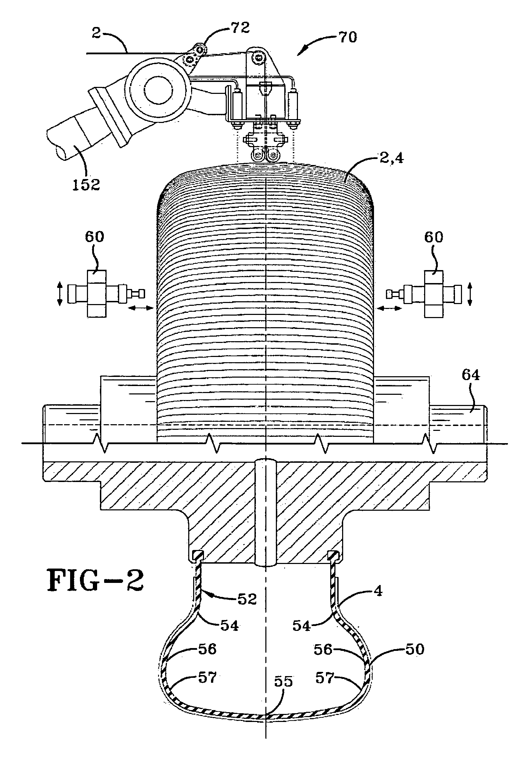

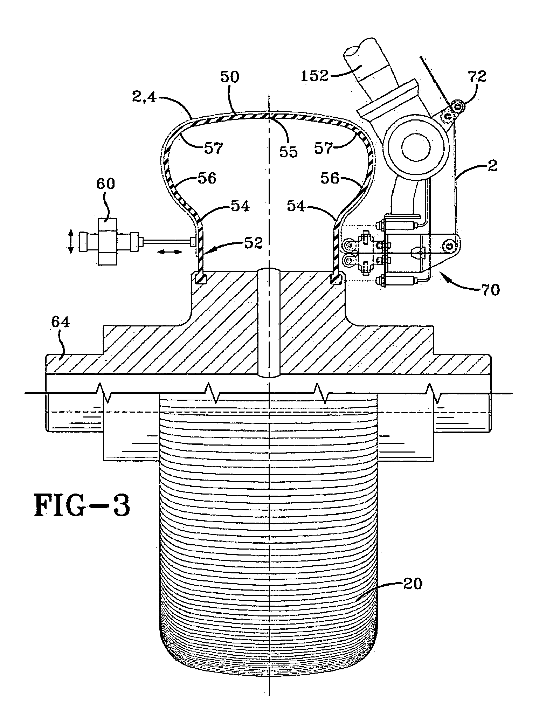

With reference to Figs. 2 and 3, a cross-sectional view of the toroidal mandrel 52 for use with the present invention is shown. Radially inner portions 54 on each side 56 of the toroidal mandrel 52 have a concave curvature that extends radially outward toward a crown area 55 of the toroidal mandrel 52. As the concave cross section extends radially outward toward an upper sidewall portion 57, the curvature transitions to a convex curvature in what is otherwise known as the crown area 55 of the toroidal mandrel 52. This cross section very closely duplicates the final, as molded, cross section of a tire.

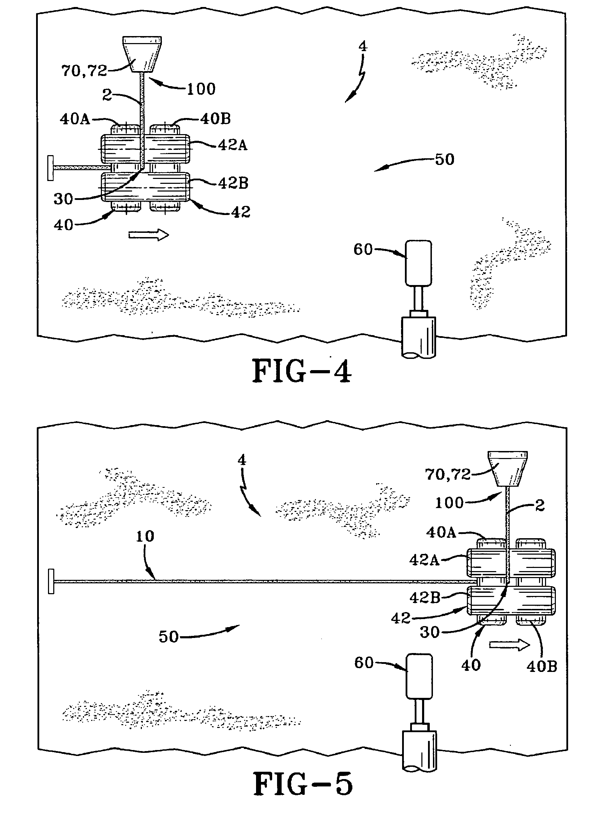

With reference to Figs. 4 through 9, the means for guiding the dispensed cords has a ply mechanism 70 as shown in a schematic form which illustrates how the ply cord 2 is laid onto the elastomeric surface 4 in the predetermined ply path 10. The schematic views illustrate the basic working components of the ply mechanism 70 and how the ply mechanism 70 operates to place the ply cords 2 in a precise location.

To advance the ply cords 2 on the predetermined ply path 10, the ply mechanism 70, which contains two pairs of parallel pins or rollers 40, 42 with the second pair 42 placed 90° relative to the first pair 40 and in a physical space of about one inch above the first pair 40 and forms a center opening 30 between the two pairs of rollers, which enables the predetermined ply path 10 to be centered. As illustrated, the ply cords 2 are held in place by a combination of embedding the cord into the elastomeric surface 4 previously placed onto the toroidal surface 50 and the surface tackiness of the uncured surface. Once the ply cords 2 are properly applied around the entire circumference of the toroidal surface 50, a subsequent lamination of elastomeric topcoat compound (not shown) can be used to complete the construction of the carcass 20.

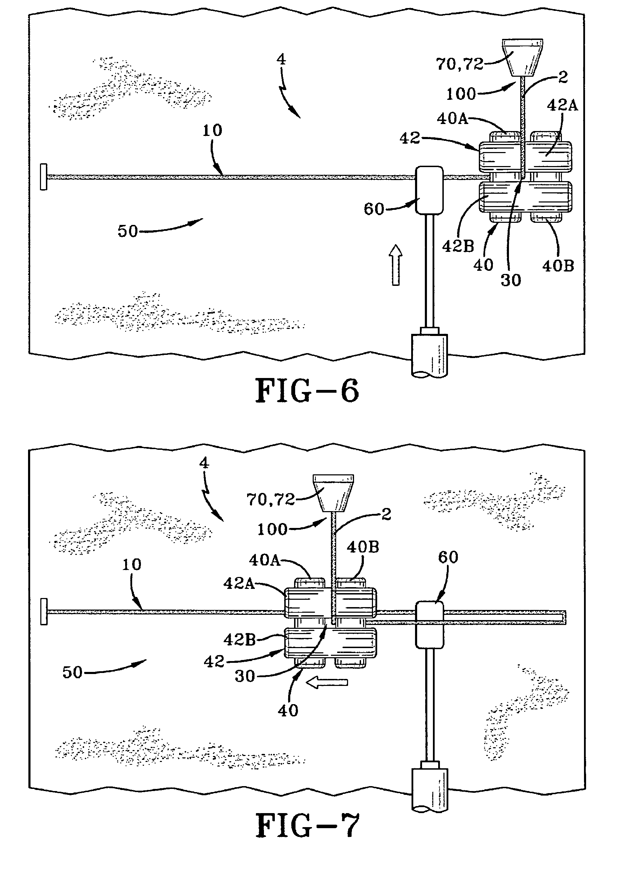

As illustrated in Fig. 4, a bottom pair of rollers 40 uses a first roller 40A to embed the ply cord 2 on a forward traverse across the toroidal surface 50. In Fig. 5, once the predetermined cord path 10 has been transferred across the toroidal surface 50, the apparatus 100 stops and a holding and loop forming plate mechanism 60 advances onto the ply cord 2 and presses the ply cord against the toroidal surface 50, as illustrated in Fig. 6. The apparatus 100 then reverses the predetermined ply path 10 forming a loop 12 in the predetermined ply path 10. At this point, a second roller 40B of the first pair 40 pulls the ply cord 2 back across the toroidal surface 50. The top second pair 42 positions the ply cord 2 in a parallel predetermined ply path 10 and creates spacing between the ply cords 2, hereinafter referred to as the pitch, when the toroidal mandrel 52 and the toroidal surface 50 covered by the bottom coat elastomeric layer 4 advances for a return path. In other words, and as shown in Fig. 7, the toroidal surface 50 is indexed, or advanced slightly, allowing a circumferential spacing or pitch P to occur between the first ply path down in the second return ply path. As illustrated in Fig. 7, the loop 12 that is formed on the reverse traverse is slightly shifted and therefore allowed to be pulled against the loop forming mechanism 60 as the ply cord 2 clinches against the pin to create the desired loop position.

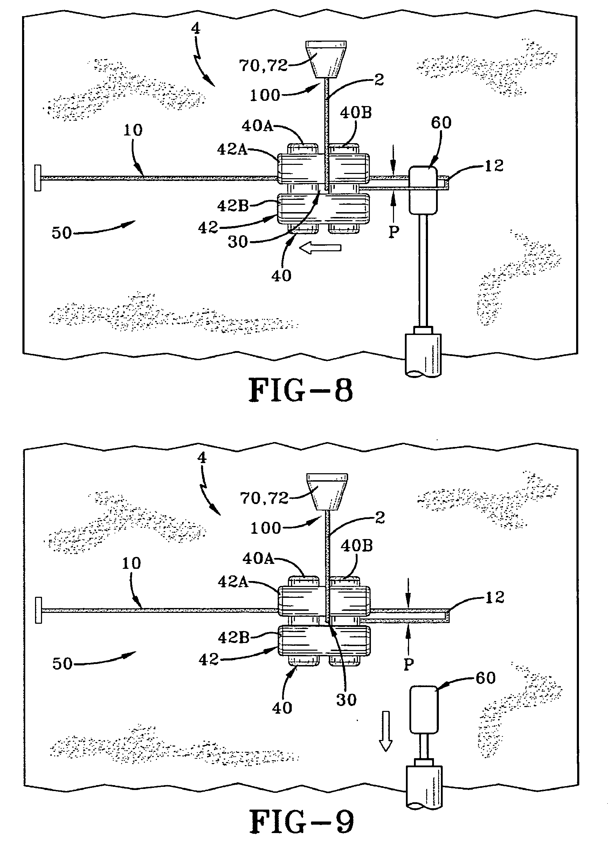

As shown in Fig. 8, a looped end 12 is formed and the second ply path 10 is laid on the toroidal surface 50 parallel to the first ply path 10. As shown in Fig. 9, the loop mechanism 60 then retracts and the second ply path 10 is completed. This process is repeated to form a series of ply cords 2 that are continuous and parallel within at least certain portions of the ply path 10. This is accomplished by having the toroidal mandrel 52 with the toroidal surface 50 with an elastomeric layer 4 laminated onto the toroidal surface to index or advance uniformly about its axis with each traverse of the pair of rollers pins 40, 42 to create a linearly parallel ply path 10 uniformly distributed about the toroidal surface 50. By varying the advance of the ply cord 2 as the apparatus 100 traverses, non-linear parallel cord paths 10 may be formed to tune tire stiffness and to vary flexure with the load.

Preferably, the ply cord 2 is wrapped around a tension or ply mechanism 70 to adjust and maintain the required tension in the ply cord. If the tension is too high, the ply cord 2 will lift from the elastomeric layer 4 when the roller pins 40, 42 reverse direction. If the tension is too low, the ply cord 2 will not form a loop at a correct length around the loop pin mechanism 60. As an example, tension on the ply cord 2 is created as the ply cord passes between a series of rollers 72 capable of adjusting and maintaining tension, as needed for the process and the roller 40, 42. The amount of tension applied should be sufficiently small so that the ply cords 2 do not lift from the placed position on the toroidal surface 50. In other words, the ply cord 2 rests on the toroidal surface 50 positioned and stitched to an elastomeric layer 4 such that the tack between the ply cord and the elastomeric layer is larger than the tension applied by the ply mechanism 70. This permits the ply cords 2 to lay freely on the toroidal surface 50 without moving or separating during the ply construction step. This is significantly different from other conventional mechanisms, which require linear paths and a large amount of tension to maintain the paths 10 as the equipment is traversing over a convex surface to create a laminated ply.

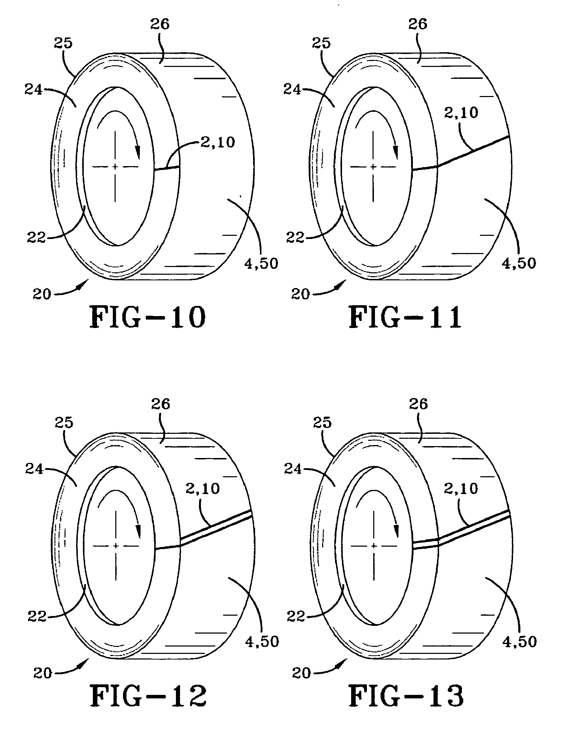

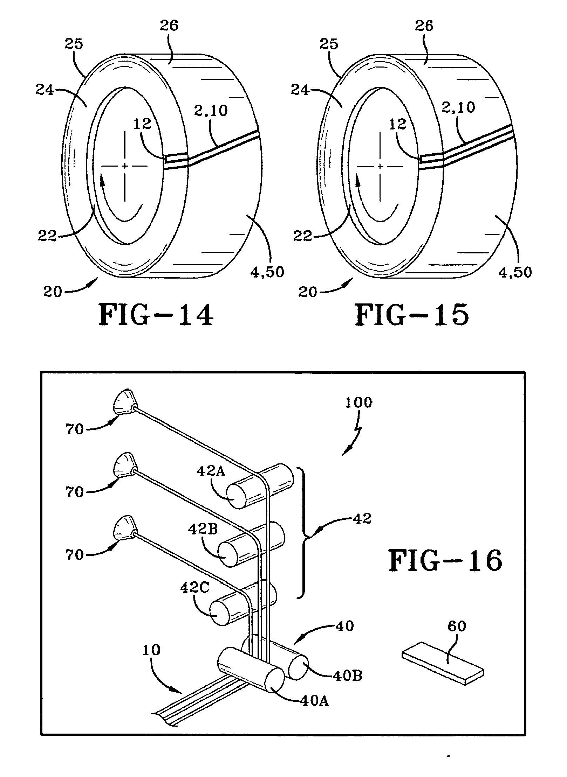

With reference to Figs. 10-15, the three dimensional view of a cylinder represents how the predetermined ply path 10 is initiated along what would generally be considered the bead region 22 of a carcass 20 along a tire sidewall 24 toward a shoulder region 25 of the toroidal surface 50 and then traverses across the toroidal surface 50 in an area commonly referred to as the crown 26. In Fig. 11, the ply path 10 is laid at a slight angle. While the ply path 10 may be at any angle, including radially at 90° or less, the ply path also can be applied in a non-linear fashion. As shown in Fig. 12, once the ply cord 2 is traversed completely across the toroidal surface 50 and down the opposite side, the loop 12 is formed as previously discussed and the ply cord is brought back across the crown 26. In Fig. 13, the ply cord 2 then proceeds down the tire sidewall 24 toward the bead region 22 where the ply cord is turned and forms a loop 12, as previously discussed, and then traverses back across the toroidal surface 50 in a linear path 10 parallel to the first and second ply cord paths 10. This process is repeated in Figs. 14 and 15 as the toroidal surface 50 is indexed, creating a very uniform and evenly spaced ply cord path 10.

With reference to Fig. 16, the ply mechanism 70 can be provided with additional rollers 40 such that multiple ply paths 10 can be traversed about the toroidal surface 50. Three dispensing spools 74 traverse three rollers 42A, 42B, 42C, which are spaced in a staggered sequence, permitting openings between each pair of rollers to continue to guide the ply cords 2 while the lower or bottom pair of rollers 40A, 40B provide the stitching of the ply cords to the toroidal surface 50. Again, the same loop mechanism 60 can be used for clinching the ply cords 2 at each loop end 12 (only one loop mechanism 60 shown). However, there typically are a pair of loop mechanisms, one being on each side of the toroidal surface 50.

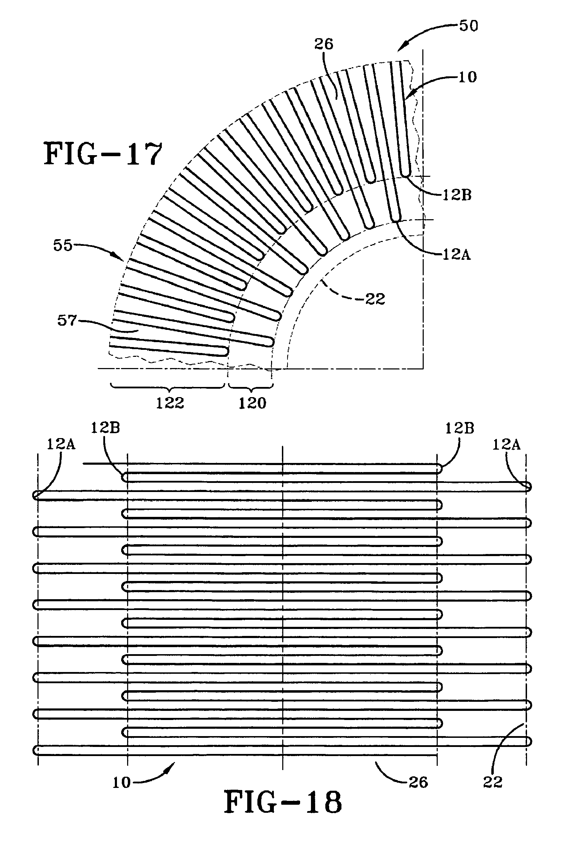

With reference to Fig. 17, a ply path 10 is shown whereby the loop ends 12B can be adjusted radially outward. The loop 12, while being part of a continuous strand of ply cord 2, is only partially shown going up to the sidewall 26 and terminating there. This continuous strand of ply cord 2 may create a ply path 10 whereby the loop ends 12B of the first set of adjacent pairs of ply paths 10 have loop ends 12B at a diameter slightly higher than the second pair of loop ends 12A. This may be repeated in an alternating fashion. This particular cord path 10 creates a cord path as illustrated in Fig. 18, shown in a flat orientation. Thus, fewer cord ends 12A may be spaced at the bead attachment area 22 while, in the crown area 26, additional ply cord paths 10 may be added. Depending on the ply cord diameter, the ends per inch are physically limited by the diameter of the ply cord 2. For example, passenger tires typically cannot exceed 30 ends per inch with minimum rivet or rubber spaced between the ply cords 2. In order to achieve a higher ends per inch, fine ply cords 2 must be used and there is a limit to the strength of such fine ply cords. However, as a tire carcass with a flat formed ply expands into the toroidal configuration, the ply cord spacing, or pitch (P), is stretched in such a fashion that the cords per inch near the crown area 26 of the tire are oftentimes at least half the number in the bead area. This physical limitation can be corrected by the judicious use of the ply endings 12 in different diameters, as illustrated in Figs. 18-21. In Fig. 18, a cord spacing of 30 ends per inch could achieve a crown cord spacing of 30 ends per inch. The reason is the doubling of the ply cords 2 in the crown area 26 achieved by shifting the looped end 12B slightly above the bead area 22. Thus, in the toroidally shaped ply path 10, it is possible to maintain a uniform ply path all the way across the carcass structure. This enables a tire designer to use finer cords or fewer cords and yet still achieve the same strength of other conventional tires.

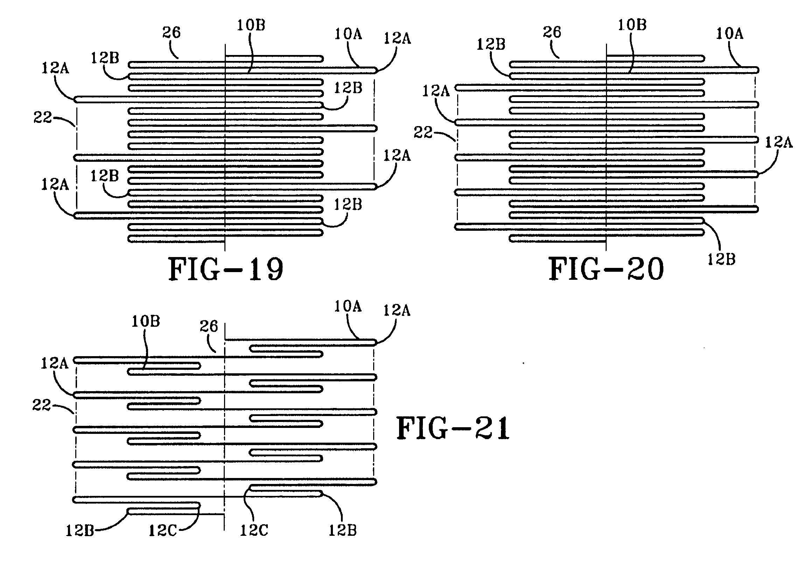

With reference to Fig. 19, one long ply cord path 10A can be used across the tire, then the two short ply cord paths 10B can be applied, and then one long cord ply path 10A on the opposite side. The long ply cord paths 10A are circumferentially offset on a pattern of two short paths 10B being between each circumferentially offset long ply cord paths 10A. Thus, four such ply cord path short ends 12B are on each side between the long ends 12A.

Figure 20 shows a ply path construction whereby only one such short ply cord path 10B is between circumferentially offset long paths 10A. In Fig. 21, each ply cord path 10 creates a circumferentially offset long ply path 10A. Thus, on each half of the ply cord path as shown in Fig. 21, there is a long 10A, then a short 10B, then a long ply cord path 10A formed by loop ends 12A, 12B, and 12C.

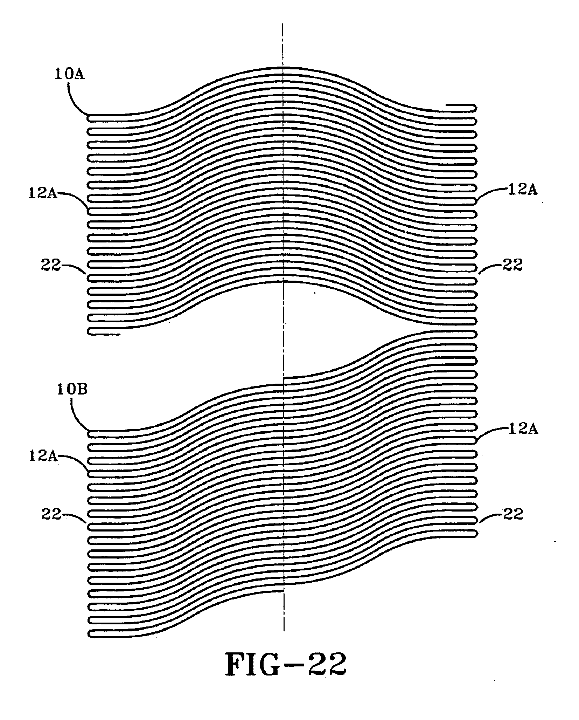

With reference to Fig. 22, two ply cord paths 10A, 10B are shown that extend end to end in a repeating fashion. The ply cord paths 10A, 10B show the possibility of creating two layers. A first layer of parallel ply cord paths 10A is shown with a curvature in one direction. The second ply cord path 10B of Fig. 22 could be a second layer of ply cord paths that could be applied continuously over the top of the first ply cord path 10A. Both of these ply cord paths 10A, 10B demonstrate the ability to make nonlinear cord paths in a uniform fashion. This technique may greatly facilitate the construction of a true geodesic ply cord path tires as a viable and manufacturingly feasible tire. Almost all nonlinear or geodesic type ply cord paths 10 are simply approximations due to the fact that the ply cords 2 are not laid in a fashion that is truly representative of the tire's internal shape or inflated shape as cured. As Purdy, in his book, Mathematics Underlying the Design of Pneumatic Tires, noted at page 84, "It is virtually impossible, by any acceptable means, to produce tire beads by the winding process that are uniform in size, shape, or in tension in the cords in the bead region. It is largely for such reasons that the cord winding machines have been of limited value in forming geodesic cord paths." The apparatus 100 allows the ply cord paths to be placed in almost exactly the same positions as they will be in the inflated and cured tire, thus making such non-linear plied tires feasible.

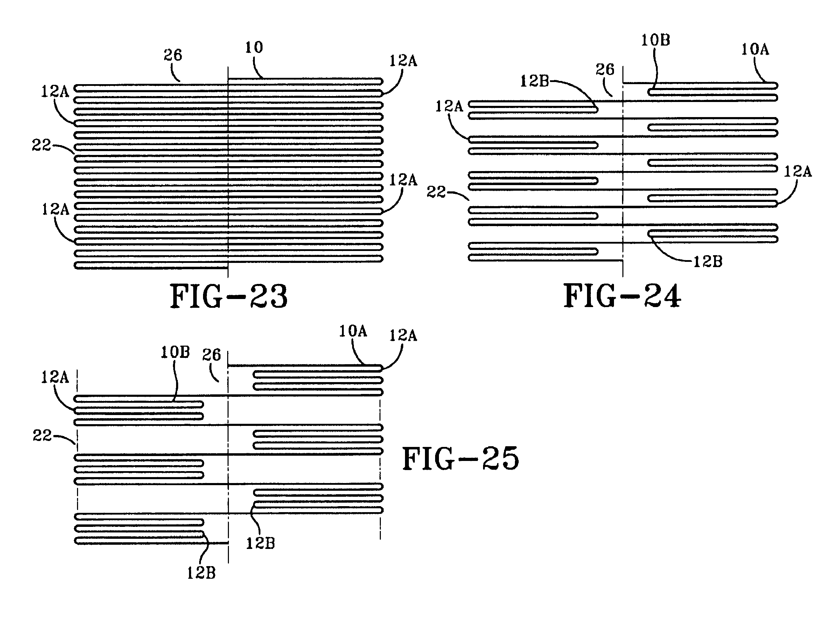

With reference to Fig. 23, the carcass ply 20 shows how a standard tire, conventionally manufactured, could be built where the ply endings 12 are at the same location. With reference to Figs. 24 and 25, predetermined ply paths 10 are designed such that the sidewall will have an increased number of cords extending up toward the crown area 26 but will stop short of crossing the crown area at loop end 12B and will return by traversing back and then create a continuous ply across the entire toroidal surface 50. These ply paths 10 provide only a portion of the ply cords 2 actually crossing the centerline of the tire under the crown area 26. In most light weight passenger and truck tires, the ply cords 2 crossing the centerline are of little structural value based in part to the tire's belt reinforcing structure, which arguably transmits all the loads across the tire crown area 26. Accordingly, the use of a large number of ply cords 2 across the crown area 26 is a redundancy that adds no great structural value. The ply cord paths 10 of Figs. 24 and 25 provide a split ply concept, but with the advantage that at least every second or every third ply cord path 10 crosses the crown 26 creating enhanced structural value. In other words, instead of simply relying on split ply paths 10B, these have an alternating continuous ply path 10A across the crown area 26 that provides additional safety and reliability to the tire.

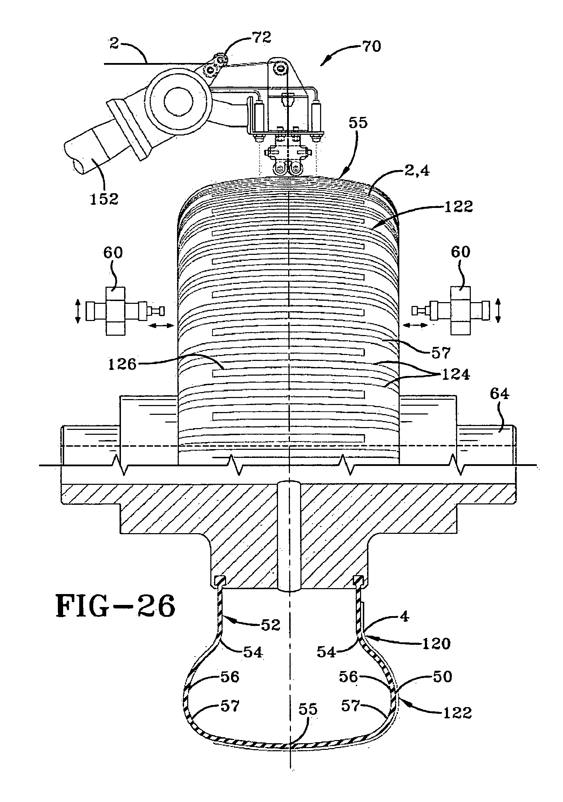

As demonstrated by Figs. 17 and 26, the toroidal surface 50 follows the curvature of a tire in substantially finished configuration and dimension. As explained, the mandrel 52 has multiple concave curvatures forming the toroidal surface 50. A concave curvature 120 on each side of the mandrel begins radially outward from the bead attachment area 22. A second outward sidewall curvature 122 extends radially outward from each first concave curvature outward toward the crown area 55 of the mandrel 52. As the mandrel cross section extends radially outward toward the upper sidewall portion 57, the curvature of the sidewalls 122 transitions to a convex curvature in what is otherwise known as the crown area 55 of the mandrel 52. The cross section closely duplicates the finished, as molded, cross section of a tire. As shown in Figs. 15-17 and as previously explained, one or more cords in continuous lengths are embedded in the elastomeric layer 4 on the toroidal surface 50. Longer cord paths 124 may be initiated radially opposite a first concave curvature 120 on one side of the mandrel 52 and extend therefrom through the sidewall curvature and over the crown area 55. The longer cord path 124 may further extend to the first concave curvature 120 on the opposite mandrel side adjacent the bead attachment area 22.

Alternatively, or in conjunction with the longer cord paths 124, one or more shorter cord paths 126 may be formed. The shorter cord paths 126 may initiate opposite a first concave curvature 120 on one side of the mandrel 52 adjacent the bead attachment area 22. The shorter cord path 126 may therefrom extend through the sidewall curvature 122 and over the crown area 55, or terminate within the sidewall curvature 122. The shorter cord path 126, extended over the crown area 55, may have a looped end located at the upper sidewall of the opposite mandrel side. Such a shorter cord path 126, by ending at a higher location on the opposite sidewall of the mandrel 52, may reduce the concentration of cord paths in the bead area of the tire. The shorter cord paths 126 further conserve cord material in the finished tire and reduce manufacturing cost. Accordingly, cord paths forming a ply layer may be custom designed such that cord paths have differing path extensions and lengths. The shorter paths may terminate before crossing the equatorial plane of the mandrel (tire) or cross over the crown area to the sidewall on the opposite side. The longer paths may extend from bead attachment region 22 to bead attachment region 22 on the opposite side, crossing the crown region 26 of the tire. As a result, a cord layer may be constructed having fewer cord paths present (lower cord path density) at the bead attachment area 22 and a higher ply cord path density at the crown region 26 of the tire.

Figure 17 represents one such cord ply configuration having cord paths of differing lengths. One ply path 10 exists whereby loop ends 12B of a shorter cord path are placed and located radially outward of the sidewall curvature 122 of the toroidal surface 50. Loop ends 12A of longer cord paths are placed and located radially inward of the toroidal surface 50 opposite the first concave curvature 120 at the bead attachment area 22. The loop ends 12B of the first set of adjacent pairs of cord paths 10 and the loop ends 12A of the adjacent set of cord paths are thus located at different respective radial locations relative to the first and second curvatures 120, 122 of the toroidal surface 50. The ends 12A extend through the first and second concave curvatures 120, 122 of the toroidal surface 50 to the bead attachment area 22, while the ends 12B terminate radially outward of the first concave curvature 120 opposite the sidewall of the toroidal surface. Consequently, fewer cord ends 12A are spaced radially below the first concave curvature 120 at the bead attachment area 22 than in the crown area 26 where a higher cord path density exists.

A tire may accordingly be constructed having cord ply cord paths of differing lengths. A like number of longer and shorter cord paths, or a different number of longer and shorter paths, may be employed depending on the tire performance characteristics desired. The longer cord paths may be constructed to extend over the crown region 26 of the toroidal surface 50 to the bead attachment areas 22. The shorter cord paths may be constructed to have loop ends that terminate either in the crown region 26, or the sidewall region 24. The cord paths may be advantageously constructed through placement and embedding one or more cords in continuous lengths onto the elastomeric layer 4 in predetermined relatively longer and shorter cord paths, the longer cord paths extending from a respective side of the toroidal surface 50 over the convex crown region 26 of the toroidal surface and one or more relatively shorter cord paths having opposite path ends located within a sidewall or crown region (Fig. 18) or the convex crown region of the toroidal surface. Thus, by having one or more cord paths extend between opposite path ends located radially outward of the first or second concave curvatures 120, 122, while other cord paths extend radially to the bead attachment area 22, the desired result of a higher cord density (cord ends per inch) at the crown area and a lower cord density at the bead attachment area 22 may be achieved.

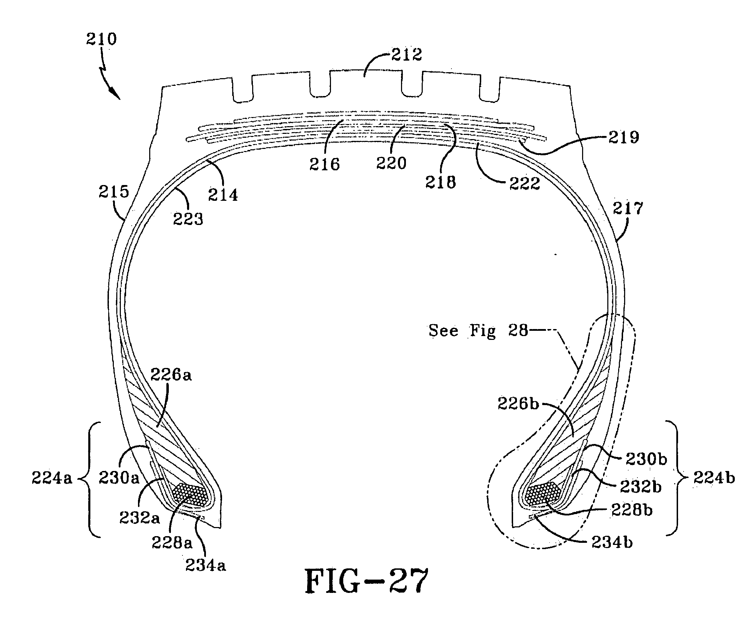

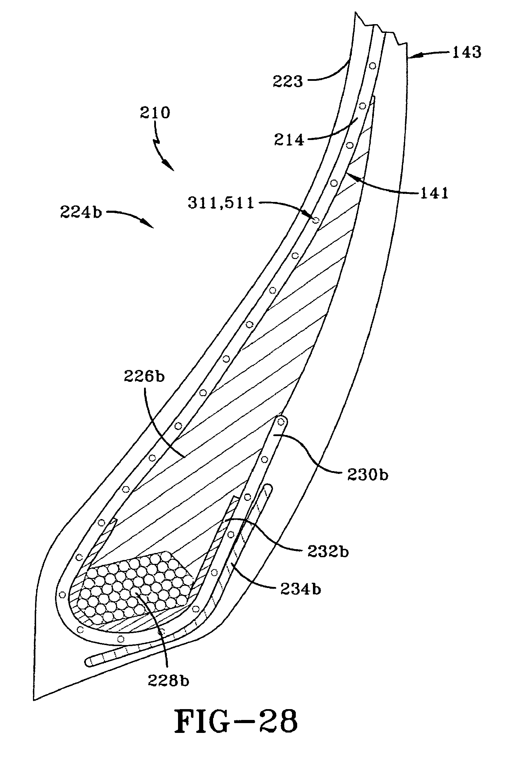

Figure 27 shows an example tire 210 for use with the present invention. The example tire 210 may be built utilizing the above described method and apparatus 100. The example tire 210 has a tread 212, an innerliner 223, a belt structure 216 comprising belts 218, 220, a carcass 222 with a single carcass ply 214, an underlay 219 between the carcass and the belt structure, two sidewalls 215, 217, and two bead carcass regions 224a, 224b comprising bead filler apexes 226a, 226b and beads 228a, 228b. The example tire 210 is suitable, for example, for mounting on a rim of a passenger vehicle. The carcass ply 214 includes a pair of axially opposite end portions 230a, 230b, each of which is secured to a respective one of the beads 228a, 228b. Each axial end portion 230a or 230b of the carcass ply 214 is turned up and around the respective bead 228a, 228b to a position sufficient to anchor each axial end portion 230a, 230b, as seen in detail in Fig. 28.

The carcass ply 214 and/or underlay 219 may be a conventional rubberized ply having a plurality of substantially parallel carcass reinforcing members made of such material as polyester, rayon, or similar suitable organic polymeric compounds. The carcass ply 214 may engage the axial outer surfaces of two flippers 232a, 232b and two chippers 234a, 234b.

If the example tire 210 is built utilizing the above described method and apparatus 100, the carcass ply 214 and underlay 219 will likely comprise Single End Dipped (SED) cords. For production efficiency, the SED cords will be large diameter cords. In accordance with the present invention, the use of square woven fabric made of filament yarns of different stress-strain characteristics for warp and weft will improve production cost and time. The fabric may be constructed with the Leno (standard or 2T) weaving technique. The following materials may be utilized for warp and/or weft: PEN, PET, PK, PBO, PVA, Rayon, Nylon 6 and 6,6, aramid, carbon fiber, and glass fiber. The warp yarn may be of different modulus than the weft yarn. Further, warp yarns within the same fabric may also vary, such as aramid warp yarn combined with nylon weft yarn. Utilization of such a fabric for the entire carcass ply 214 and the entire underlay 219 may shorten the winding process compared to the use of the above described Single End Dipped cords for the carcass ply and underlay. The fabric may be dipped, tackified, and woven to the specified width (i.e., prefabricated). Advantageously, the fabric need not be calendered (no more need of extruder or gear pumps) and may be applied directly at a tire building machine, as described above.

In accordance with the present invention, the example carcass ply 214 or the carcass ply 214 and the underlay 219 may be reinforced with a woven or knitted reinforcing structure 141.
The woven reinforcing structure 141 may comprise parallel carcass reinforcing members (weft) 312, 512 of the carcass ply 214 and additional supporting members (warp) 311, 511 for supporting the cords during the tire building process. The woven or knitted fabric of the reinforced ply 214 and/or underlay 219 may be constructed by placing a series of strips adjacent to each other at the ply mechanism 70.

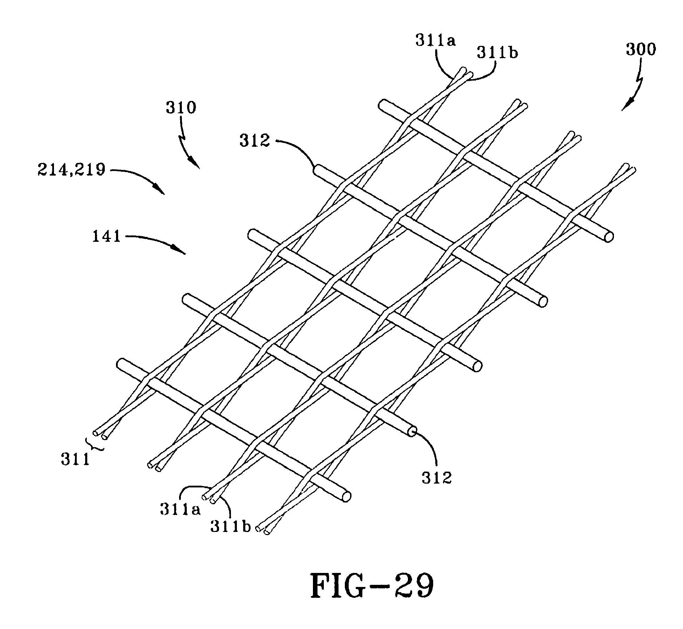

One example woven reinforcing structure 141 for the carcass ply 214 or the carcass ply 214 and the underlay 219 may define a layer of LENO weave fabric. As illustrated in the example of Figs. 28 and 29, a woven reinforcing structure 141 may comprise a layer or layers 300 of LENO fabric 310 with warp yarn pairs 311 extending generally in a circumferential direction of the pneumatic tire 10 and weft yarns 312 extending generally in a radial direction of the pneumatic tire. Each warp yarn pair 311 may have warp yarns 311 a and 311 b twisting around each other between fill weft yarns 312.

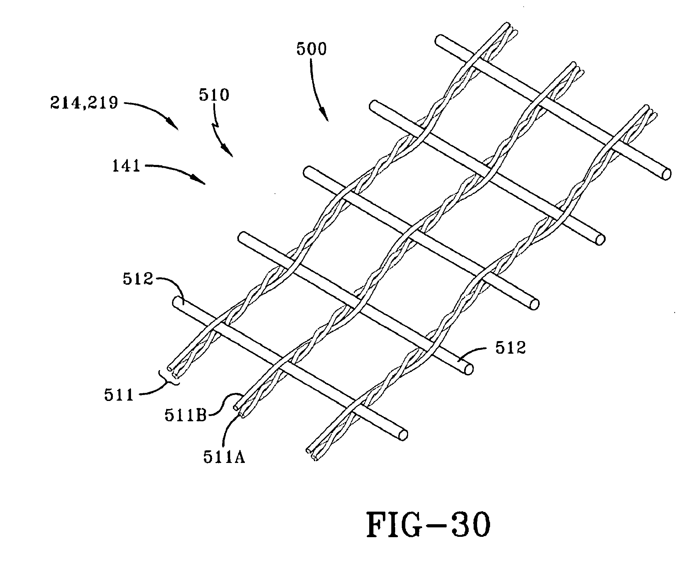

As illustrated alternatively in the example of Figs. 28 and 30, another example woven reinforcing structure 141 for the carcass ply 214 or the carcass ply 214 and the underlay 219 may define a woven reinforcing structure 141 having a layer or layers 500 of LENO 2T fabric 510 with warp yarns 511 extending generally in a circumferential direction of the pneumatic tire 10 and weft yarns 512 extending generally in the radial direction of the pneumatic tire. Each warp yarn 511 may have a first set of twisted pairs of filler warp yarns 511 a extending on one side of, and perpendicular to, fill weft yarns 512 and a second set of warp yarns 511 b extending generally parallel to and below the filler warp yarns 511 a and alternating above/below the weft yarns 512.

As seen in Figs. 28 and 29, the warp yarn pairs 311 extend circumferentially along the LENO fabric 310. It is the warp yarns 311 a and 311 b that provide the maintenance of proper spacing and relative orientation during the tire building process, as described above. The warp yarns 311, 511 may be a spun staple yarn, a multifilament yarn, and/or a monofilament yarn formed of a suitable material.

As stated above, examples of suitable materials for the warp yarns 311, 511 include polyamide, aramids (including meta and para forms), polyester, polyvinyl acetate, nylon (including nylon 6, nylon 6,6, and nylon 4,6), polyethylene naphthalate (PEN), rayon, polyketone, carbon fiber, PBO, and glass fiber.

The weft yarns 312, 512 may be a multifilament yarn, and/or a monofilament yarn formed of a suitable material. Examples of suitable materials for the weft yarns 312, 512 include polyamide, aramids (including meta and para forms), polyester, polyvinyl acetate, nylon (including nylon 6, nylon 6,6, and nylon 4,6), polyethylene naphthalate (PEN), cotton, rayon, polyketone, carbon fiber, PBO, and glass fiber.

The warp and/or weft yarns 311, 312, 511, 512 may also be hybrid yarns. Hybrid yarns may be multiple yarns, made up of at least 2 fibers of different material (for example, aramid and nylon). These different fiber materials may produce hybrid yarns with various chemical and physical properties. Hybrid yarns may be able to change the physical properties of the final product in which they are used. Example hybrid yarns may be an aramid fiber with a nylon fiber, an aramid fiber with a rayon fiber, and an aramid fiber with a polyester fiber.

As used herein, mechanical resiliency of a yarn is the ability of the yarn to displace longitudinally without an elastic deformation of the material. Mechanical resiliency allows the LENO fabric 310, 510 to have a minor amount of resilient elongation for compatibility with the example tire 10, but use stronger yarns in the carcass ply 214 or underlay 219.

The woven reinforcing structure 141 is an open construction fabric which permits the strike through of rubber in a tire 10 for a better bonded construction. The openness of the fabric used for the woven reinforcing structure 141 may be determined by the spacing and character of the warp yarns 311 or 511. The weft yarns 312 are typically spaced as necessary to maintain the position of the warp yarns 311 or 511 provide suitable strength to the carcass ply 214 and/or underlay 219.

The woven reinforcing structure 141 may be treated with an adhesion promoter. Examples of adhesion promoters include resorcinol formaldehyde latex (RFL), isocyanate based material, epoxy based material, and materials based on melamine formaldehyde resin. The woven reinforcing structure 141 may also have a tackified finish, or green tack, applied for facilitating adhesion during the building process of a green tire. The selection of materials for the tackified finish may depend upon the materials selected for use in the tire 10. Tackified finishes may be achieved by various methods such as coating the fabric in an aqueous blend of rosin and rubber lattices, or with a solvent solution of an un-vulcanized rubber compound.

Further, the woven or knitted reinforcing structure 141 may comprises multiple layers, e.g. two, three, or even more layers, of the LENO fabric 310, 510 to provide extra strength for the carcass and/or underlay. When more than one layer of LENO tape 310, 510 is used for the carcass ply 214 and/or underlay 219, a layer of unvulcanized rubber may be placed between the layers of LENO tape to ensure an effective bond.

The formation of the woven reinforcing structure 141 may begin with the acquisition of the basic yarns for the fabric. Subsequently, the yarns may be twisted to provide additional mechanical resilience. After the twisting, warp yarns 311, 511 may be placed on a large beam for the formation of the woven reinforcing structure 141. The woven reinforcing structure 141 may be formed by LENO weaving with the appropriate spacing of the warp yarn pairs 311, 511. After the woven reinforcing structure 141 formation, the structure may be finished with adhesive promoter, such as an RFL treatment. If a tackified finish is desired, this is provided following the adhesive promoter finishing. The final layer may be slit into the specific widths.

The woven reinforcing structure 141 in accordance with the present invention may reduce cost and complexity of the tire building process without lessening rolling resistance, high speed capability, and handling characteristics. Additionally, the woven reinforcing structure 141 may reduce noise due to vibration damping (i.e., circumferential reinforcement provided by the warp yarns 311 or 511).

One example construction for the woven reinforcing structure 141 may comprise 1220/1 Dtex 14 EPI (ends per inch) rayon warp yarns and 2200/2 Dtex 26 EPI polyester weft yarns. In general, the warp pairs 311, 511 may have a density of 10 EPI to 18 EPI and the weft yarns 312, 512 may have a density of 5 EPI to 35 EPI.

The woven reinforcing structure 141 of square woven fabric made may be made of filament yarns of different stress-strain characteristics for warp and weft. The fabric 300, 500 may be produced with the Leno (standard or 2T) weaving technique or knitted. The warp yarns 311, 511 may be different modulus than the weft yarns 312, 512, or the same.

The fabric 310, 510 may be used as carcass reinforcement or as carcass and underlay reinforcement. The fabric 310, 510 may be dipped, tackified, and woven/knitted to a specified ply width. The fabric 300, 500 does not require calendering and may thus be applied directly at a tire building machine, as described above.

Further, there is now no requirement to calender the fabric 310, 510 or slit the material prior to application on a green tire. Rolls of fabric strips produced at specified width may be supplied to a tire plant and directly applied on a tire building machine.

The warp yarn may provide a circumferential reinforcement whereas a conventional carcass provides only a radial reinforcement. The woven or knitted reinforcing structure 141 provides additional circumferential stiffness to a carcass package, thus reducing rolling resistance.

In the above explained embodiments, the reinforcing structure 141 may start at a turn up end or an end portion of the reinforced ply in at least one bead region of the tire and extends about the respective bead into the sidewall of the tire a radial outer end of a tire apex 26a, 26b and a tire shoulder area.

In an alternative embodiment, the reinforcing structure 141 may start at a turn up end or an end portion of the reinforced ply in at least one bead region of the tire and extend about the respective bead radially outwards up to 10% to 100%, alternatively 30% to 65% or about 50%, of the radial height of a tire apex.

In yet an alternative embodiment, the reinforcing structure 141 may start at distance from a turn up end or an end portion of the reinforced ply in at least one bead region of the tire.

In yet an alternative embodiment, the reinforcing structure 141 may start at distance from a turn up end or an end portion of the reinforced ply in at least one bead region of the tire and extend about the respective tire bead into the sidewall of the tire between a radial outer end of a tire apex and a tire shoulder area.

In an alternative embodiment, the reinforcing structure 141 may start at distance from a turn up end or an end portion of the reinforced ply in at least one bead region of the tire and extend about the respective bead radially outwards up to 10% to 100%, alternatively 30% to 65% or about 50%, of the radial height of a tire apex.

In yet an alternative embodiment, the reinforcing structure 141 at least partially extends under the tread of tire between the tire shoulders or extends at least from one tire shoulder to the other tire shoulder. In this case, the reinforcing structure is similar to a belt or a breaker and may replace a belt or a breaker in the tire.

In yet an alternative embodiment, the reinforcing structure 141 comprises at least two of said reinforcing structures 141 disposed in a spaced relationship.

In yet an alternative embodiment, the reinforcing structure 141 comprises at least three or at least four reinforcing structures 141 disposed in a spaced relationship.

In one embodiment the reinforcing structure 141 consists of one layer 300 of an open construction woven fabric or an open construction knitted fabric.

As stated above, a carcass ply 214 or underlay 219 with a reinforcement structure 141 in accordance with the present invention produces an excellent and less costly and more efficiently manufactured pneumatic tire 10. This carcass ply 214 and the underlay may thus enhance tire production, even though the complexities of the structure and behavior of the pneumatic tire are such that no complete and satisfactory theory has been propounded.

Carcass ply and underlay cord characteristics affect the other components of a pneumatic tire (i.e., carcass ply/underlay affects apex, belt, overlay, etc.), leading to a number of components interrelating and interacting in such a way as to affect a group of functional properties (noise, handling, durability, comfort, high speed, and mass), resulting in a completely unpredictable and complex composite.

The complexity of the interrelationships of the multiple components makes the actual result of modification of a carcass ply or underlay, in accordance with the present invention, essentially impossible to predict or foresee from the infinite possible results. Only through extensive experimentation have the carcass ply 214, underlay 219, and woven reinforcement structure 141 of the present invention been revealed as an excellent, unexpected, and unpredictable option.

## Claims

1. A pneumatic tire comprising a tread (12) and at least one reinforced ply (14) placed in a predetermined location on a toroidal surface, wherein the tread (12) is disposed radially outward of the reinforced ply (14), the reinforced ply (14) comprising a reinforcing structure (141), the reinforcing structure (141) comprising at least one layer (300) of an open construction woven or knitted fabric having warp yarns (311) extending in a first direction and weft yarns (312) extending in the radial direction or at least substantially in the radial direction of the tire (10), **characterized in that** the reinforced ply (14) is a carcass ply.

2. The tire of claim 1 further comprising a belt structure disposed radially between the reinforced ply (14) and the tread.

3. The tire of claim 1 or 2 wherein the reinforced ply (14) is the single carcass ply of the tire.

4. The tire of claim 1, 2 or 3 wherein the reinforced ply (14) is comprised entirely of the woven or knitted fabric and/or the reinforced structure (141) is an integral part of the reinforced ply (14).

5. The tire of at least one of the previous claims wherein the first direction is the circumferential direction of the tire (10) or makes an angle in a range of from 1 degree to 45 degrees, alternatively from 5 degrees to 45 degrees or from 5 degrees to 30 degrees, with the circumferential direction of the tire (10).

6. The tire of at least one of the previous claims wherein the reinforcing structure (141) is proximal to at least one bead region (24a, 24b) of the tire (10).

7. The tire of at least one of the previous claims wherein the woven fabric has a 5 ends per 2.54 cm to 18 ends per 2.54 cm, preferably 14 ends per 2.54 cm, warp construction and a 5 ends per 2.54 cm to 35 ends per 2.54 cm, preferably 26 ends per 2.54 cm, weft construction.

8. The tire of at least one of the previous claims wherein the warp yarns are 1220/1 dtex rayon and the weft yarns are 2200/2 dtex polyester.

9. The tire of claim 1 wherein the fabric is a knitted fabric.

10. The tire of at least one of the previous claims wherein the fabric further comprises an adhesion promoter disposed thereon.

11. The tire of at least one of the previous claims wherein the reinforced ply (14) has two or more layers of woven or knitted fabric.

12. The tire of at least one of the previous claims wherein the warp yarns comprise at least two fibers of different fiber materials.

## Patentansprüche

1. Luftreifen, umfassend eine Lauffläche (12) und mindestens eine verstärkte Lage (14), die an einer vorbestimmten Stelle auf einer kreisringförmigen Oberfläche angebracht sind, wobei die Lauffläche (12) radial auswärts von der verstärkten Lage (14) angeordnet ist, wobei die verstärkte Lage (14) eine Verstärkungsstruktur (141) umfasst, wobei die Verstärkungsstruktur (141) mindestens eine Schicht (300) aus einem gewebten oder gewirkten Gewebe von offener Konstruktion umfasst, das Kettfäden (311), die sich in einer ersten Richtung erstrecken, und Schussfäden (312), die sich in der radialen Richtung oder mindestens im Wesentlichen in der radialen Richtung des Reifens (10) erstrecken, aufweist, **dadurch gekennzeichnet, dass** die verstärkte Lage (14) eine Karkassenlage ist.

2. Reifen nach Anspruch 1, weiter eine radial zwischen der verstärkten Lage (14) und der Lauffläche angeordnete Gürtelstruktur umfassend.

3. Reifen nach Anspruch 1 oder 2, wobei die verstärkte Lage (14) die einzige Karkassenlage des Reifens ist.

4. Reifen nach Anspruch 1, 2 oder 3, wobei die verstärkte Lage (14) vollständig aus dem gewebten oder gewirkten Gewebe besteht und/oder die verstärkte Struktur (141) ein integraler Teil der verstärkten Lage (14) ist.

5. Reifen nach mindestens einem der vorgenannten Ansprüche, wobei die erste Richtung die Umfangsrichtung des Reifens (10) ist oder einen Winkel in einem Bereich von 1 Grad bis 45 Grad, alternativ von 5 Grad bis 45 Grad oder von 5 Grad bis 30 Grad, mit der Umfangsrichtung des Reifens (10) bildet.

6. Reifen nach mindestens einem der vorgenannten Ansprüche, wobei die verstärkte Struktur (141) proximal zu mindestens einem Wulstbereich (24a, 24b) des Reifens (10) ist.

7. Reifen nach mindestens einem der vorgenannten Ansprüche, wobei das gewebte Gewebe eine Kettfadenkonstruktion von 5 Enden je 2,54 cm bis 18 Enden je 2,54 cm, bevorzugt 14 Enden je 2,54 cm, und eine Schussfadenkonstruktion von 5 Enden je 2,54 cm bis 35 Enden je 2,54 cm, bevorzugt 26 Enden je 2,54 cm, aufweist.

8. Reifen nach mindestens einem der vorgenannten Ansprüche, wobei die Kettfäden 1120/1 dtex Rayon sind und die Schussfäden 2200/2 dtex Polyester sind.

9. Reifen nach Anspruch 1, wobei das Gewebe ein gewirktes Gewebe ist.

10. Reifen nach mindestens einem der vorgenannten Ansprüche, wobei das Gewebe weiter ein darauf angebrachtes Haftfördermittel umfasst.

11. Reifen nach mindestens einem der vorgenannten Ansprüche, wobei die verstärkte Lage (14) zwei oder mehr Schichten gewebten oder gewirkten Gewebes aufweist.

12. Reifen nach mindestens einem der vorgenannten Ansprüche, wobei die Schussfäden mindestens zwei Fasern aus verschiedenen Fasermaterialien umfassen.

## Revendications

1. Bandage pneumatique comprenant une bande de roulement (12) et au moins une nappe renforcée (14) placée à un endroit prédéterminé sur la surface toroïdale, la bande de roulement (12) étant disposée à l'extérieur en position radiale de la nappe renforcée (14), la nappe renforcée (14) comprenant une structure de renforcement (141), la structure de renforcement (141) comprenant au moins une couche (300) d'une étoffe tissée ou tricotée de structure ouverte dont les fils de chaîne (311) s'étendent dans une première direction et les fils de trame (312) s'étendent dans la direction radiale ou au moins de manière essentielle dans la direction radiale du bandage pneumatique (10), **caractérisé en ce que** la nappe renforcée (14) est une nappe de carcasse.

2. Bandage pneumatique selon la revendication 1, comprenant en outre une structure de ceinture disposée en position radiale entre la nappe renforcée (14) et la bande de roulement.

3. Bandage pneumatique selon la revendication 1 ou 2, dans lequel la nappe renforcée (14) représente la nappe de carcasse unique du bandage pneumatique.

4. Bandage pneumatique selon la revendication 1, 2 ou 3, dans lequel la nappe renforcée (14) est comprise entièrement par l'étoffe tissée ou tricotée et/ou la structure renforcée (141) fait partie intégrante de la nappe renforcée (14).

5. Bandage pneumatique selon au moins une des revendications précédentes, dans lequel la première direction représente la direction circonférentielle du bandage pneumatique (10) ou fait un angle dans la plage de 1° à 45°, en variante de 5° à 45° ou de 5° à 30° avec la direction circonférentielle du bandage pneumatique (10).

6. Bandage pneumatique selon au moins une des revendications précédentes, dans lequel la structure de renforcement (141) est située à proximité d'au moins une zone de talon (24a, 24b) du bandage pneumatique (10).

7. Bandage pneumatique selon au moins une des revendications précédentes, dans lequel l'étoffe tissée possède une structure de chaîne de 5 bouts par 2,54 cm à 18 bouts par 2,54 cm, de préférence de 14 bouts par 2,54 cm, et une structure de trame de 5 bouts par 2,54 cm à 35 bouts par 2,54 cm, de préférence de 26 bouts par 2,54 cm.

8. Bandage pneumatique selon au moins une des revendications précédentes, dans lequel les fils de chaîne représentent de la rayonne de 1220/1 dtex et les fils de chaîne représentent un polyester de 2200/2 dtex.

9. Bandage pneumatique selon la revendication 1, dans lequel l'étoffe est une étoffe tricotée.

10. Bandage pneumatique selon au moins une des revendications précédentes, dans lequel le tissu comprend en outre un promoteur de l'adhérence disposé par-dessus.

11. Bandage pneumatique selon au moins une des revendications précédentes, dans lequel la nappe renforcée (14) possède deux couches ou plus d'une étoffe tissée ou tricotée.

12. Bandage pneumatique selon au moins une des revendications précédentes, dans lequel les fils de chaîne comprennent au moins deux fibres de matières fibreuses différentes.
